# EUROPEAN PATENT APPLICATION

(11) **EP 4 604 231 A1**
(43) Date of publication of application: **20.08.2025**
(21) Application number: 24221137.3
(22) Date of filing: 18.12.2024
(51) Int. Cl.: H01M 10/04, H01M 50/471, H01M 50/474, H01M 50/477, H01M 50/486, H01M 50/593, H01M 50/548, H01M 50/609

(54) **SECONDARY BATTERY**

(30) Priority: 15.02.2024 JP 2024021240
(71) Applicant: Prime Planet Energy & Solutions, Inc., Chuo-ku, Tokyo 103-0022 (JP)
(72) Inventor: WAKIMOTO, Ryoichi, Tokyo 103-0022 (JP); IMANISHI, Hiroaki, Tokyo 103-0022 (JP)
(74) Representative: Kuhnen & Wacker Patent- und Rechtsanwaltsbüro PartG mbB

(57) **Abstract**

This secondary battery includes an insulating sheet (700) that covers an electrode assembly, the electrode assembly includes a first surface, the insulating sheet (700) includes a first region (R1) constituted of a vicinity of one end portion of the insulating sheet (700) and a second region (R2) constituted of a vicinity of the other end portion of the insulating sheet (700), the first region (R1) and the second region (R2) cover the first surface, and an overlapping region (OR) in which the second region (R2) overlaps with the first region (R1) is provided, in a width direction of the electrode assembly, the overlapping region (OR) includes a central region (CR) and an end-portion region (PR) located beside each of both sides of the central region (CR), and the central region (CR) is provided with a recess (710s) as a non-overlapping region that reduces an overlapping area of the overlapping region (OR).

## Description

### CROSS REFERENCE TO RELATED APPLICATIONS

This nonprovisional application is based on Japanese Patent Application No. 2024-021240 filed on February 15, 2024 with the Japan Patent Office, the entire contents of which are hereby incorporated by reference.

### BACKGROUND OF THE INVENTION

### Field of the Invention

The present technology relates to a secondary battery.

### Description of the Background Art

Japanese Patent No. 4537353 discloses a prismatic battery in which a positive electrode terminal is provided on a side surface on one side and a negative electrode terminal is provided at an end portion on the other side in a battery case.

### SUMMARY OF THE INVENTION

When a prismatic battery is configured such that a positive electrode terminal is provided on a side surface on one side and a negative electrode terminal is provided at an end portion on the other side in the battery case, a battery assembly can be likely to have a low height. However, there is room for further improvement in order to obtain a battery that can be manufactured efficiently and stably. For example, injection of an electrolyte solution needs to take a long time or needs to be performed a plurality of times in order to attain infiltration of the electrolyte solution into an electrode assembly having a high capacity and a high density.

An object of the present technology is to provide a secondary battery so as to improving an infiltration property of an electrolyte solution into an electrode assembly.

The present technology provides the following secondary battery.
[1] A secondary battery comprising: an electrode assembly including a first electrode and a second electrode having a polarity different from a polarity of the first electrode; a battery case that accommodates the electrode assembly; a first electrode tab group electrically connected to the first electrode and disposed at one end portion of the electrode assembly; a second electrode tab group electrically connected to the second electrode and disposed at the other end portion of the electrode assembly; and an insulating sheet that covers the electrode assembly, wherein the electrode assembly includes a first surface, the insulating sheet includes a first region constituted of a vicinity of one end portion of the insulating sheet and a second region constituted of the other end portion of the insulating sheet, the first region and the second region cover the first surface, an overlapping region in which the second region overlaps with the first region is provided, in a width direction of the electrode assembly, the overlapping region includes a central region and an end-portion region located beside each of both sides of the central region, and the central region has a non-overlapping region that reduces an overlapping area of the overlapping region.
[2] The secondary battery according to [1], wherein in the central region, a ratio of providing the non-overlapping region with respect to the overlapping area when the non-overlapping region is not provided is 20% or more.
[3] The secondary battery according to [1] or [2], wherein at least one of the first region and the second region is provided with a recess as the non-overlapping region at an end side of the central region in a peripheral direction of the insulating sheet, the recess being recessed inward with respect to an end side of the end-portion region.
[4] The secondary battery according to [3], wherein the recess is provided in the second region.
[5] The secondary battery according to [3] or [4], wherein an angle formed by each of lateral sides of both ends of the recess and the end side of the end-portion region is 100° or more.
[6] The secondary battery according to any one of [1] to [5], further comprising: a first spacer disposed on an end surface of the electrode assembly on which the first electrode tab group is provided; and a second spacer disposed on an end surface of the electrode assembly on which the second electrode tab group is provided, wherein the insulating sheet and the first spacer are connected to each other on a side on which the first electrode tab group is provided, and the insulating sheet and the second spacer are connected to each other on a side on which the second electrode tab group is provided.
[7] The secondary battery according to [6], wherein in an area when viewed from the first surface side of the electrode assembly, X1 is larger than Y1, where X1 is defined as a ratio of [an area of a region in which the first spacer, the first region, and the second region overlap] / [an area of the first spacer], and Y1 is defined as a ratio of [an area of a region in which the electrode assembly, the first region, and the second region overlap] / [an area of the electrode assembly].
[8] The secondary battery according to [6] or [7], wherein in order to connect the insulating sheet to the first spacer, the first region is provided with an opening or notch, and the second region is connected to the first spacer at a region facing the opening or notch.
[9] The secondary battery according to any one of [1] to [8], wherein in an area when viewed from the first surface side of the electrode assembly, X2 is larger than Y2, where X2 is defined as a ratio of [an area of an overlapping portion between the first region and the second region in the end-portion region] / [an area of the end-portion region], and Y2 is defined as a ratio of [an area of the overlapping portion between the first region and the second region in the central region] / [an area of the central region].
[10] The secondary battery according to any one of [1] to [9], wherein the electrode assembly has a third surface adjacent to the first surface, the insulating sheet has a fourth region that covers the third surface, a bent portion is provided between the first region and the fourth region, and a tip of the second region is located away from the bent portion.
[11] The secondary battery according to any one of [1] to [10], wherein a gas-discharge valve is provided in the battery case, and a surface of the battery case in which the gas-discharge valve is provided faces the first surface.
[12] The secondary battery according to any one of [1] to [11], wherein the battery case includes a case main body provided with a first opening at one end portion of the case main body and a second opening at the other end portion of the case main body, a first sealing plate that seals the first opening and that is welded to the case main body, and a second sealing plate that seals the second opening and that is welded to the case main body, the first electrode tab group is disposed at an end portion of the electrode assembly on the first opening side, and the second electrode tab group is disposed at an end portion of the electrode assembly on the second opening side.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing a secondary battery according to one embodiment.
Fig. 14 is a perspective view showing a state before two electrode assemblies included in the secondary battery according to one embodiment are overlapped with each other.
Fig. 15 is a cross sectional view of each of the electrode assemblies and the current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a first perspective view showing an implementation of the spacer.
Fig. 20 is a second perspective view showing the implementation of the spacer.
Fig. 21 is a side view showing a positional relation between the spacer and an insulating sheet.
Fig. 22 is a perspective view showing a state of inserting the electrode assemblies into the case main body.
Fig. 23 is a perspective view showing a state of attaching a sealing plate to the current collectors on the positive electrode side.
Fig. 24 is a cross sectional view of each of the electrode assemblies and the current collectors shown in Fig. 23 along XXIV-XXIV.
Fig. 25 is a perspective view showing a configuration of the secondary battery.
Fig. 26 is a cross sectional view of the secondary battery shown in Fig. 25 along XXVI-XXVI.
Fig. 27 is a cross sectional view of the secondary battery shown in Fig. 25 along XXVII-XXVII.
Fig. 28 is a development view of the insulating sheet.
Fig. 29 is a reference cross sectional view corresponding to the cross section of the secondary battery shown in Fig. 25 along XXVI-XXVI.
Fig. 30 is a reference cross sectional view corresponding to the cross section of the secondary battery shown in Fig. 25 along XXVI-XXVI.
Fig. 31 is a diagram showing an area of each region when viewed from the first surface side of the electrode assembly.
Fig. 32 is a diagram showing a central region and an end-portion region when viewed from the first surface side of the electrode assembly.
Fig. 33 is a partial enlarged view of the first surface side of the electrode assembly shown in Fig. 30.
Fig. 34 is a development view of an insulating sheet according to a second embodiment.
Fig. 35 is a development view of an insulating sheet according to a third embodiment.
Fig. 36 is a development view of an insulating sheet according to an fourth embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

In the figures, when an electrode assembly included in the secondary battery is a stacked type electrode assembly, an X direction is defined as a long-side direction of a stacked surface, whereas when the electrode assembly is a wound type electrode assembly, the X direction is defined as a direction along a winding axis thereof. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the specification of the present application, the first direction (X direction) may be referred to as a "width direction" of each of the secondary battery, the electrode assembly, and the case main body, the second direction (Z direction) may be referred to as a "height direction" of the secondary battery or the case main body, and the third direction (Y direction) may be referred to as a "thickness direction" of the secondary battery or the case main body.

### (First Embodiment: Overall Configuration of Battery)

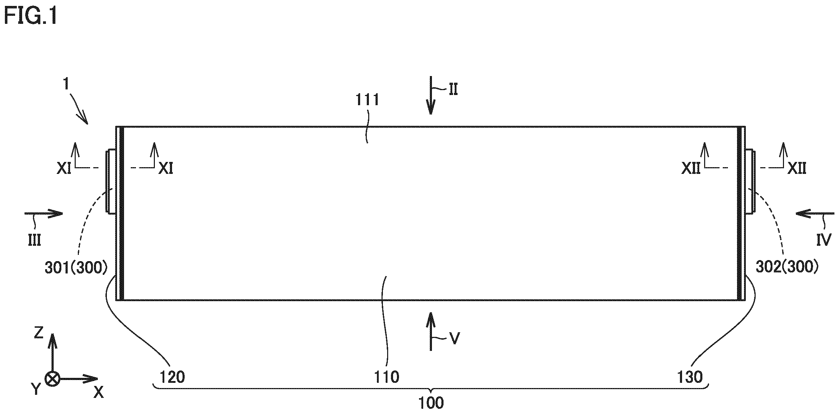

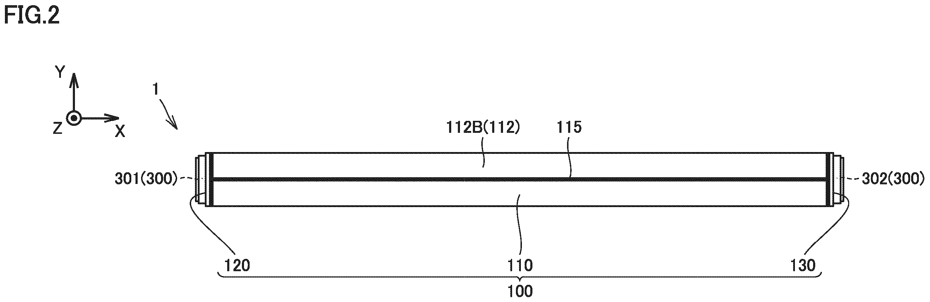

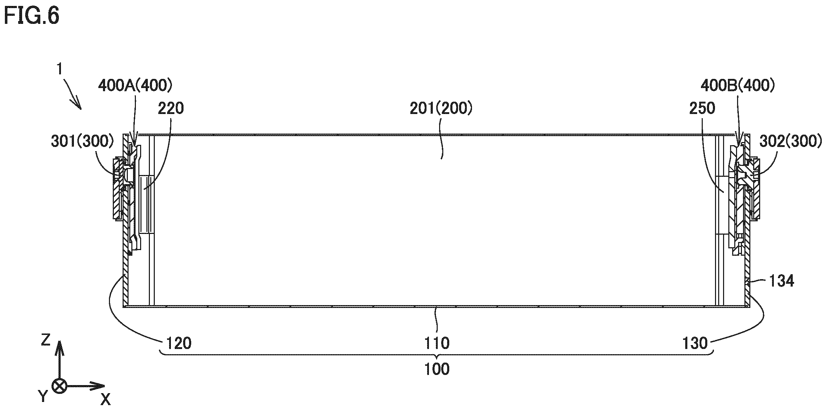

Fig. 1 is a front view of a secondary battery 1 according to a first embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120 (first sealing plate), and a sealing plate 130 (second sealing plate).

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 (first wall) and sealing plate 130 (second wall) are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

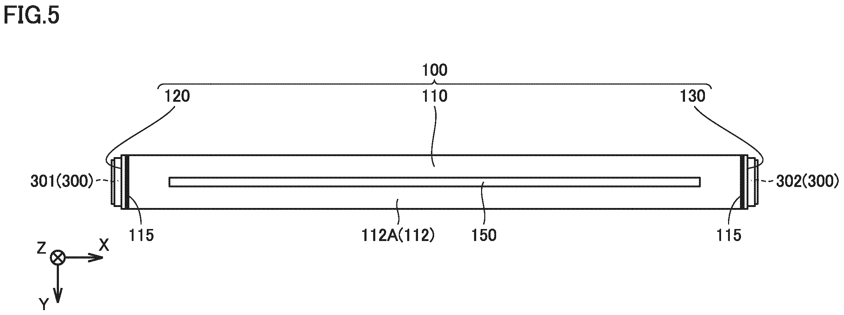

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member of case main body 110 are joined to each other.

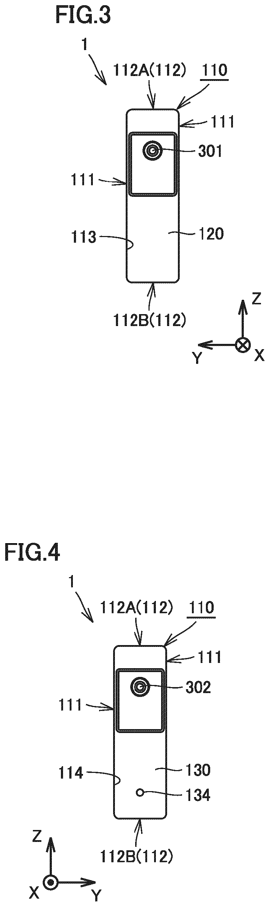

As shown in Fig. 3, an opening 113 (first opening) is provided at an end portion of case main body 110 on a first side in the first direction (X direction). Opening 113 is sealed by sealing plate 120. Joining portion 115 is formed at opening 113 so as to seal opening 1 13. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the first direction (X direction). That is, opening 114 is located at an end portion opposite to opening 113, and openings 113 and 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of electrode assembly 200. Negative electrode terminal 301 is attached to sealing plate 120, i.e., case 100.

Positive electrode terminal 302 (second electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate stacked on each other. Specifically, electrode assembly 200 is a stacked type electrode assembly in which a plurality of positive electrode plates and a plurality of negative electrode plates are alternately stacked with below-described separators 800 being interposed therebetween. However, in the present specification, the "electrode assembly" is not limited to the stacked type electrode assembly, and may be a wound type electrode assembly in which a strip-shaped positive electrode plate and a strip-shaped negative electrode plate are wound together with a strip-shaped separator being interposed therebetween. The separator can be constituted of, for example, a microporous membrane composed of polyolefin. When the electrode assembly is the stacked type electrode assembly including the plurality of positive electrode plates and the plurality of negative electrode plates, positive electrode tabs provided on the positive electrode plates may be stacked to form a positive electrode tab group, and negative electrode tabs provided on the negative electrode plates may be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

First electrode assembly 201 includes a main body portion having a substantially rectangular shape, a negative electrode tab group 220 (first electrode tab group), and a positive electrode tab group 250 (second electrode tab group).

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

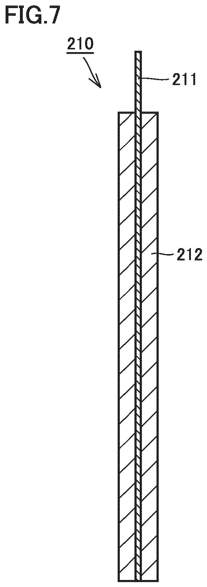

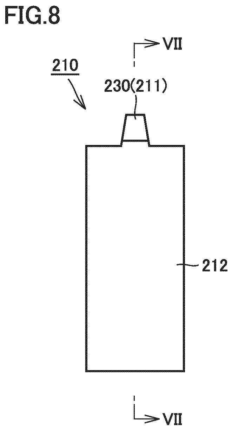

Fig. 7 is a cross sectional view of negative electrode plate 210 (cross sectional view along VII-VII in Fig. 8), and Fig. 8 is a front view showing negative electrode plate 210.

As shown in Fig. 8, a negative electrode tab 230 (first electrode tab) constituted of a negative electrode core body 211 is provided at one end portion, in the width direction, of negative electrode plate 210. When negative electrode plates 210 are stacked, a plurality of negative electrode tabs 230 are stacked to form negative electrode tab group 220. The length of each of the plurality of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 7.

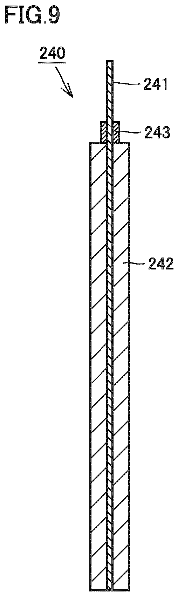

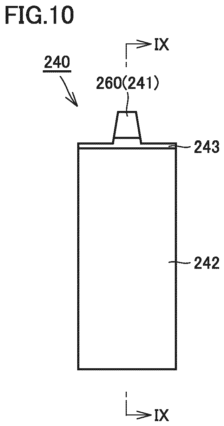

Fig. 9 is a cross sectional view of positive electrode plate 240 (cross sectional view along IX-IX in Fig. 10), and Fig. 10 is a front view showing positive electrode plate 240.

As shown in Fig. 10, a positive electrode tab 260 (second electrode tab) constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

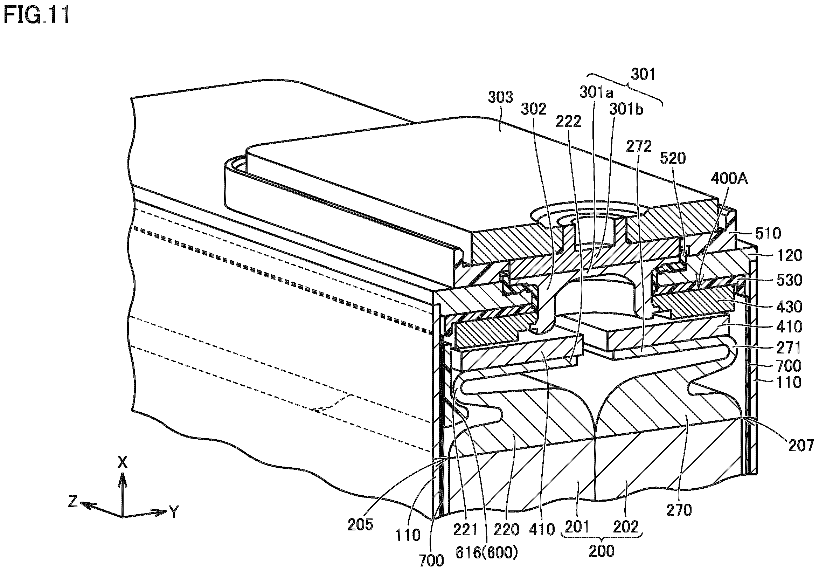

Fig. 11 is a cross sectional view of the secondary battery shown in Fig. 1 along XI-XI. As shown in Fig. 11, electrode assembly 200 includes first electrode assembly 201 and a second electrode assembly 202. Each of first electrode assembly 201 and second electrode assembly 202 includes a positive electrode (second electrode) and a negative electrode (first electrode). Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to one current collector 410 (negative electrode current collector) at its first end portion 205 in the X direction. Second electrode assembly 202 includes a negative electrode tab group 270. Negative electrode tab group 270 is electrically connected to the other current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the first electrode is connected, with respect to tip portion 222. Tip portion 222 is a portion located at an end portion of negative electrode tab group 220 on the side opposite to the side on which the first electrode is connected.

Negative electrode tab group 270 has a curved portion 271 and a tip portion 272. Curved portion 271 is a portion at which negative electrode tab group 270 is curved on the side, on which the first electrode is connected, with respect to tip portion 272. Tip portion 272 is a portion located at an end portion of negative electrode tab group 270 on the side opposite to the side on which the first electrode is connected.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes two current collectors 410 and a current collector 430. Each of current collectors 410 is a plate-shaped member. Current collector 410 has a long-side direction in the Z direction and a short-side direction in the Y direction. Current collector 430 is a plate-shaped member.

Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

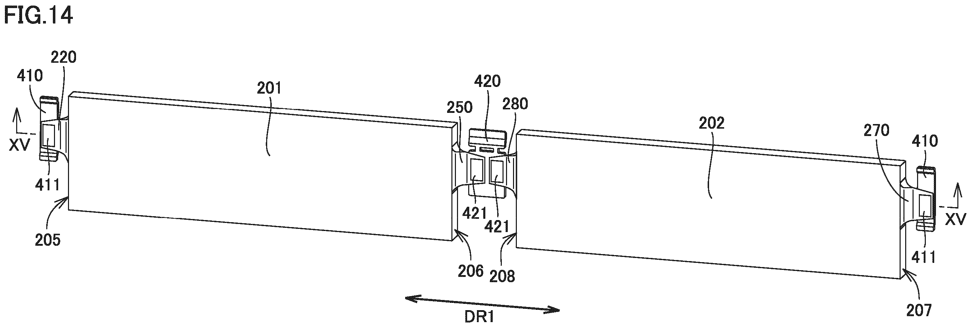

Negative electrode tab group 220 is joined to one current collector 410 at a joining location 411 (see Fig. 14) described later. Negative electrode tab group 270 is joined to the other current collector 410 at a joining location 411 (see Fig. 14) described later. Each of joining locations 411 may be formed by ultrasonic welding, resistance welding, laser welding, swaging, or the like, for example. In the present embodiment, negative electrode tab group 220 and one current collector 410 are joined by ultrasonic joining, and negative electrode tab group 270 and the other current collector 410 are joined by ultrasonic joining, for example.

Current collector 430 is joined to each of one current collector 410 and the other current collector 410 at a joining location (not shown) located at its end portion in the Z direction. Current collector 430 is connected to negative electrode terminal 301. The connection between current collector 430 and negative electrode terminal 301 may be formed by swaging and/or welding, for example.

Negative electrode terminal 301 is located on the outer side with respect to sealing plate 120. Negative electrode terminal 301 is connected to a plate-shaped member 303. It should be noted that negative electrode terminal 301 preferably includes a region 301a composed of copper or a copper alloy and a region 301b composed of aluminum or an aluminum alloy, and region 301a composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Further, sealing plate 120 may function as negative electrode terminal 301.

A below-described spacer 600 (first spacer) is disposed between sealing plate 120 and the main body portion (negative electrode tab group 220 is not included) of electrode assembly 200. Spacer 600 is composed of a resin member having an insulating property. Negative electrode tab group 220 passes internal to spacer 600, thereby protecting negative electrode tab group 220 by spacer 600. It should be noted that it is also possible to employ a configuration in which spacer 600 (first spacer) is not provided.

Although a detailed structure of spacer 600 will be described later, spacer 600 is provided with a protrusion 616 protruding in the Y direction. With this protrusion 616 of spacer 600, spacer 600 functions as a guide to facilitate curving of curved portions 221, 271 when forming curved portions 221, 271.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

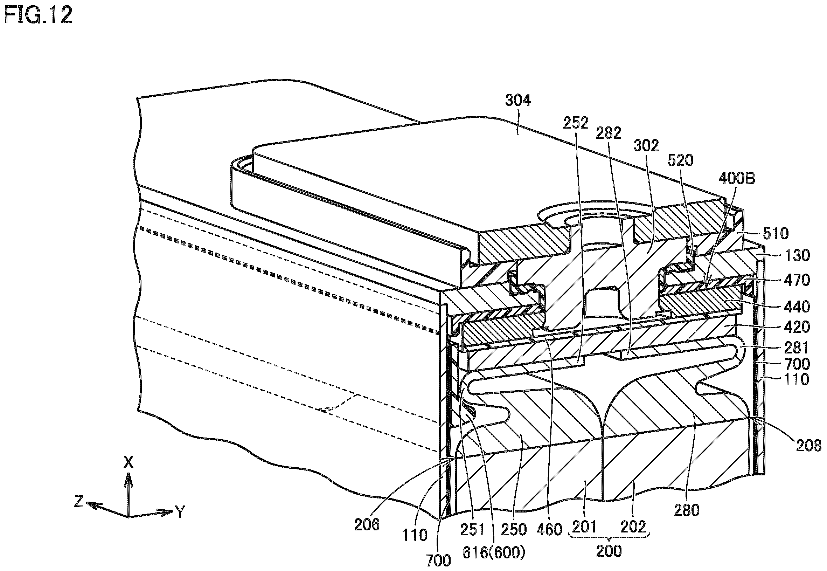

Fig. 12 is a cross sectional view of the secondary battery shown in Fig. 1 along XII-XII. The connection structure between electrode assembly 200 and current collector 400 on the positive electrode side of secondary battery 1 according to the present embodiment is different from that of the configuration on the negative electrode side in the following point: a portion corresponding to one current collector 410 and the other current collector 410 on the negative electrode side is constituted of a single component.

First electrode assembly 201 includes positive electrode tab group 250. Positive electrode tab group 250 is electrically connected to current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. Tip portions 252, 272 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 (first current collecting member) and a current collector 450 (second current collecting member). Although a plate 460 is interposed as an insulating member between current collector 420 (first current collecting member) and current collector 450 (second current collecting member), current collector 420 and current collector 450 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of a single component in one piece.

Positive electrode tab group 250 and positive electrode tab group 280 are joined, at below-described joining locations 421 (see Fig. 14), to current collector 420 constituted of the single component. Each of joining locations 421 may be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 440 is joined to current collector 420 at a joining location (not shown) located at its end portion in the Z direction. Current collector 440 is connected to positive electrode terminal 302. The connection between current collector 440 and positive electrode terminal 302 may be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Further, sealing plate 130 may function as positive electrode terminal 302.

A spacer 600 (second spacer) is disposed between sealing plate 130 and the main body portion (positive electrode tab groups 250, 280 are not included) of electrode assembly 200. Spacer 600 is composed of a resin member having an insulating property. Since each of positive electrode tab groups 250, 280 passes internal to spacer 600, each of positive electrode tab groups 250, 280 is protected by spacer 600. It should be noted that it is also possible to employ a configuration in which spacer 600 (second spacer) is not provided.

Although a detailed structure of spacer 600 will be described later, spacer 600 is provided with a protrusion 616 protruding in the Y direction. With this protrusion 616 of spacer 600, spacer 600 functions as a guide to facilitate curving of curved portions 251, 281 when forming curved portions 251, 281.

Insulating sheet 700 (electrode assembly holder) composed of a resin as described above is disposed between electrode assembly 200 and case main body 110.

### (Manufacturing Process for Secondary Battery 1)

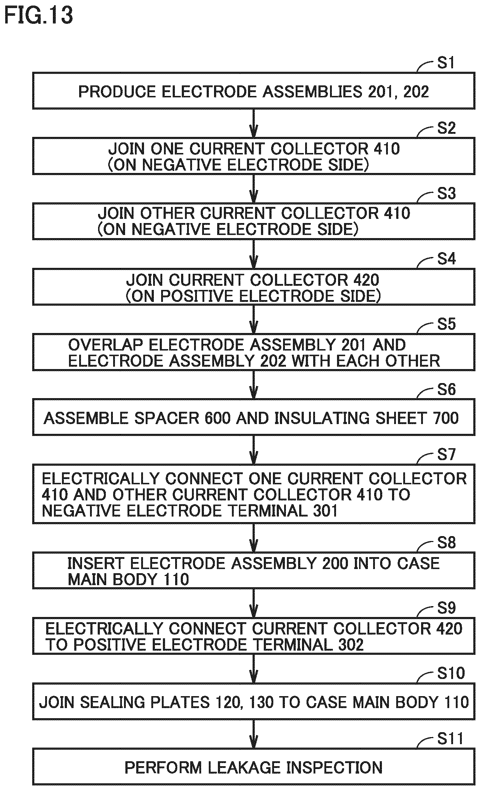

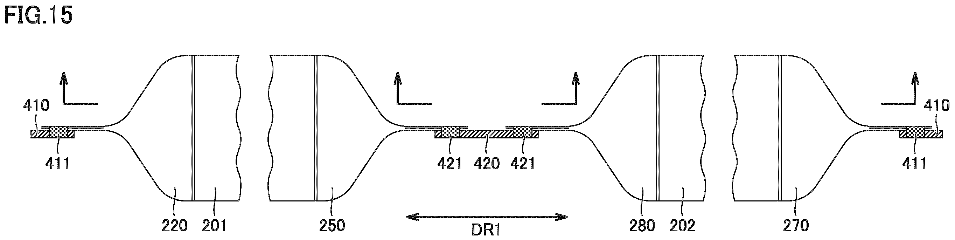

Hereinafter, a method of manufacturing the secondary battery according to the present embodiment will be described. Fig. 13 is a flowchart showing a method of manufacturing the secondary battery according to the first embodiment. Fig. 14 is a perspective view showing a state before two electrode assemblies included in the secondary battery according to the first embodiment are overlapped with each other. Fig. 15 is a cross sectional view of each of the electrode assemblies and the current collectors shown in Fig. 14 along XV-XV.

As shown in Fig. 13, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

As shown in Figs. 13 to 15, after producing first electrode assembly 201 and second electrode assembly 202, negative electrode tab group 220 is joined to one current collector 410 (step S2). Negative electrode tab group 220 is joined to one current collector 410 at joining location 411. Next, negative electrode tab group 270 is joined to the other current collector 410 (step S3). Negative electrode tab group 270 is joined to the other current collector 41 0 at joining location 411.

Next, first electrode assembly 201, current collector 420, and second electrode assembly 202 are disposed side by side in this order in the first direction (DR1 direction). Positive electrode tab group 250 is disposed on one side with respect to current collector 420 in the first direction (DR1 direction). Positive electrode tab group 250 and positive electrode tab group 280 are joined to current collector 420 with positive electrode tab group 280 being disposed on the other side with respect to current collector 420 in the first direction (DR1 direction) (step S4). Positive electrode tab group 250 and positive electrode tab group 280 are joined to current collector 420 at joining locations 421.

In the height direction of each of first electrode assembly 201 and second electrode assembly 202, each of one current collector 410, the other current collector 410 and current collector 420 is disposed on one side with respect to the center of each of first electrode assembly 201 and second electrode assembly 202. Thus, each of the current collectors can be formed to be short, thereby reducing the size of the current collector.

Each of one current collector 410, the other current collector 410, and current collector 420 is not limited to this configuration. In the height direction of each of first electrode assembly 201 and second electrode assembly 202, each of current collectors 410 and current collector 420 may be disposed at the center of a corresponding one of first electrode assembly 201 and second electrode assembly 202. In this case, in the height direction of each of first electrode assembly 201 and second electrode assembly 202, each of negative electrode tab group 220, positive electrode tab group 250, negative electrode tab group 270, and positive electrode tab group 280 is disposed at the center of a corresponding one of first electrode assembly 201 and second electrode assembly 202 so as to correspond to a corresponding one of current collectors 410 and current collector 420.

The order of the steps of joining current collectors 410 and current collector 420 to first electrode assembly 201 and second electrode assembly 202 is not limited to the one described above, and the order may be changed. Each of the respective steps of joining current collectors 410 to first electrode assembly 201 and second electrode assembly 202 is preferably performed before the below-described step of overlapping first electrode assembly 201 and second electrode assembly 202 with each other, and is preferably performed before the step of joining current collector 420 to first electrode assembly 201 and second electrode assembly 202.

Next, after joining positive electrode tab group 250 and positive electrode tab group 280 to current collector 420, positive electrode tab group 250 and positive electrode tab group 280 are bent in the thickness direction (direction orthogonal to the DR1 direction in Figs. 14 and 15) of each of first electrode assembly 201 and second electrode assembly 202, thereby overlapping first electrode assembly 201 and second electrode assembly 202 with each other (step S5). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the current collector, and the second electrode assembly may not be disposed on a straight line in the first direction (DR1 direction), and the first electrode assembly or the second electrode assembly may be inclined with respect to the current collector in the first direction (DR1 direction).

Positive electrode tab group 250 and positive electrode tab group 280 are folded such that tip portions thereof face each other. Similarly, negative electrode tab group 220 and negative electrode tab group 270 are also folded such that tip portions thereof face each other.

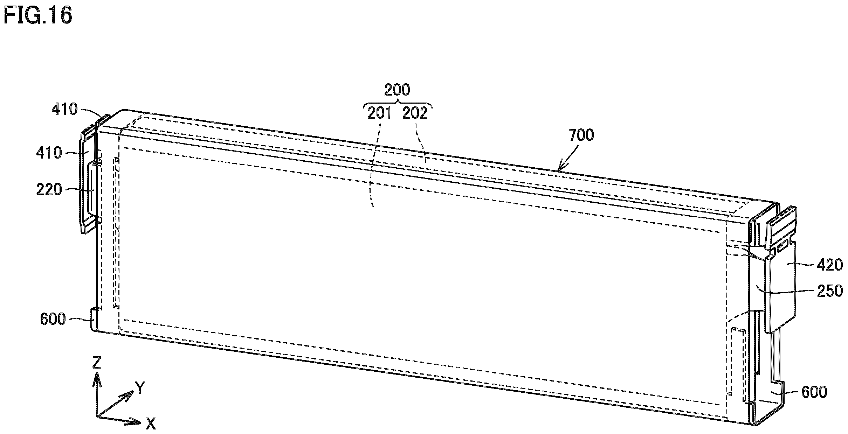

Each of Figs. 13 and 16 is a perspective view showing a state of attaching the holder and the spacer to the electrode assembly. As shown in Fig. 16, next, spacer 600 and insulating sheet 700 are assembled to electrode assembly 200 (step S6).

Insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively. A specific implementation of insulating sheet 700 will be described later.

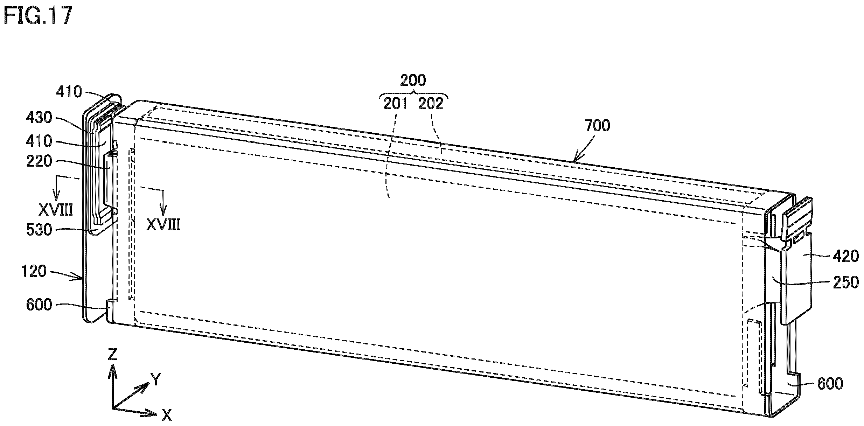

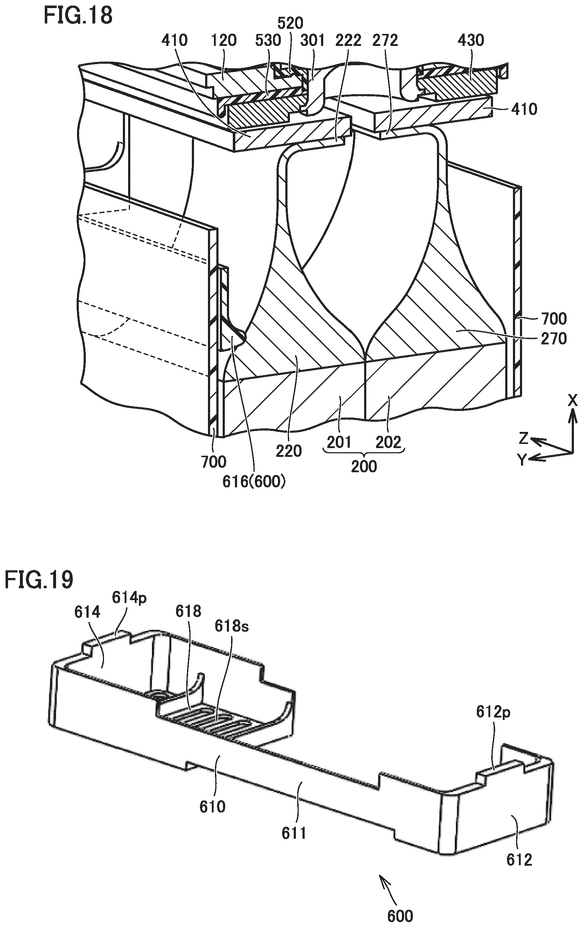

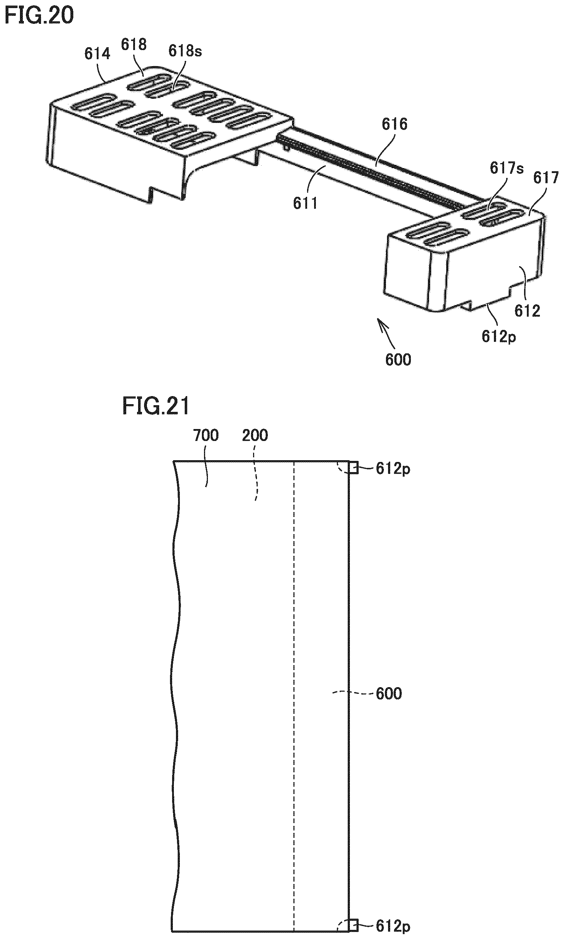

Fig. 17 is a perspective view showing a state of attaching sealing plate 120 to the current collectors on the negative electrode side. Fig. 18 is a cross sectional view of each of the electrode assemblies and the current collectors shown in Fig. 17 along XVIII-XVIII. Figs. 19 and 20 are first and second perspective views each showing an implementation of spacer 600, and Fig. 21 is a front view showing a positional relation between spacer 600 and insulating sheet 700. It should be noted that in Fig. 18, case main body 110 is not shown.

As shown in Figs. 19 and 20, spacer 600 is composed of a resin member having an insulating property. Spacer 600 includes: a first component 612 and a second component 614 each having three surrounding side walls; and a coupling wall 611 that couples one side wall of first component 612 and one side wall of second component 614 to each other. Protrusion 616 is provided on an inner side of coupling wall 611 so as to extend between first component 612 and second component 614 (in the Z direction).

First component 612 includes a first plate portion 617 provided to couple the three walls. First plate portion 617 is provided with a plurality of first through holes 617s each having an elliptical shape. The shape of each first through hole 617s and the number of first through holes 617s are appropriately selected, and are not limited to the shape and number shown. A first protrusion 612p protruding outward is provided in a region of first component 612 opposite to first plate portion 617 (side opposite to the electrode assembly).

Second component 614 includes a second plate portion 618 provided to couple the three walls. Second plate portion 618 is provided with a plurality of second through holes 618s each having an elliptical shape. The shape of each second through hole 618s and the number of second through holes 618s are appropriately selected, and are not limited to the shape and number shown. A second protrusion 614p protruding outward is provided in a region of second component 614 opposite to second plate portion 618 (side opposite to the electrode assembly).

Each of first plate portion 617 and second plate portion 618 described above is located on an end surface side of the electrode assembly. Each of these plate portions may be in abutment with the end surface of the electrode assembly, or when each of these plate portions is not in abutment with the end surface, the shortest distance to the electrode assembly is preferably 2 mm or less, and is more preferably 1 mm or less. Further, since first through hole 617s and second through hole 618s are provided, when secondary battery 1 shown in Fig. 1 is placed with the Z direction corresponding to the upward direction (such a direction that opening 113 (first opening) and opening 114 (second opening) at the both ends of case main body 110 are arranged on the left and right), even if the electrolyte solution pushed out from the electrode assembly flows to outside of the through holes during charging (generally, the electrode plate is expanded), the electrolyte solution can be readily returned to inside of the electrode assembly during discharging (generally, the electrode plate is contracted).

The outer size of spacer 600 (each of the first spacer and the second spacer) is preferably smaller than the outer size of electrode assembly 200. Since insulating sheet 700 is wound around electrode assembly 200 and is also wound around spacer 600, insertability of electrode assembly 200 of case main body 110 can be improved by making the outer size of spacer 600 smaller than that of electrode assembly 200.

As shown in Fig. 21, when electrode assembly 200 is covered with insulating sheet 700, spacer 600 is also preferably covered with insulating sheet 700. In this case, each of the negative electrode tab group and the positive electrode tab group passes internal to spacer 600, thereby protecting each of the negative electrode tab group and the positive electrode tab group by spacer 600. Further, since spacer 600 is also covered with insulating sheet 700, each of the negative electrode tab group and the positive electrode tab group is further protected. It should be noted that each of first protrusion 612p and second protrusion 614p provided in spacer 600 is desirably exposed from insulating sheet 700.

As shown in Figs. 13, 17, and 18, one current collector 410 and the other current collector 410 are electrically connected to negative electrode terminal 301 via current collector 430 after joining negative electrode tab group 220 to current collector 410, joining negative electrode tab group 270 to current collector 430, and overlapping first electrode assembly 201 and second electrode assembly 202 with each other (step S7). It should be noted that step S7 can be performed before step S6.

Specifically, negative electrode tab group 220 and negative electrode tab group 270 are folded such that tip portions 222, 272 face each other.

Each of negative electrode terminal 301 and current collector 430 is attached to sealing plate 120 with an insulating member being interposed therebetween. Current collector 430 is brought into abutment with one current collector 410 and the other current collector 410 in the X direction. It should be noted that the connecting of plate-shaped member 303 to negative electrode terminal 301 may be performed at any timing. Current collector 430 is joined to one current collector 410 and the other current collector 410 by laser welding from between sealing plate 120 and insulating sheet 700.

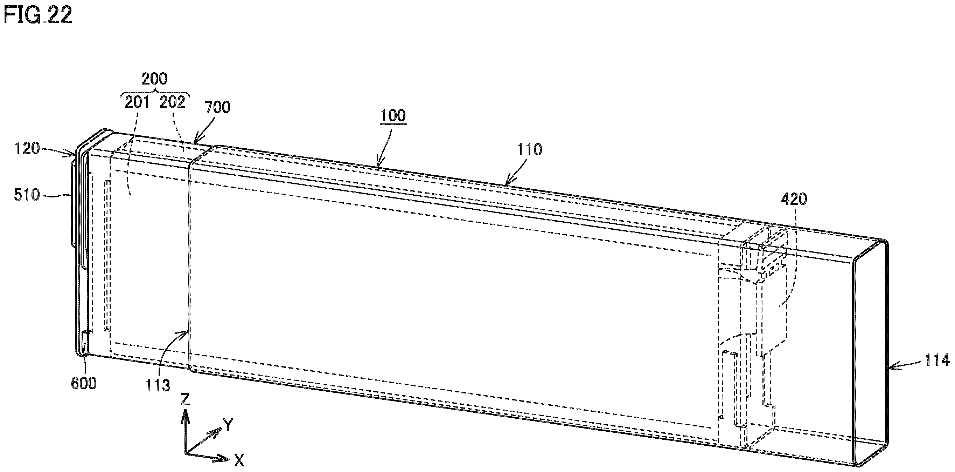

Fig. 22 is a perspective view showing a state of inserting the electrode assemblies into the case main body. As shown in Figs. 13 and 22, next, after overlapping first electrode assembly 201 and second electrode assembly 202 with each other, first electrode assembly 201 and second electrode assembly 202 are inserted into case main body 110 via opening 113 with the current collector 420 side being inserted first (step S8). On this occasion, at each of the end portions of first electrode assembly 201 and second electrode assembly 202 on the negative electrode tab 230 side, first electrode assembly 201 and second electrode assembly 202 may be inserted into case main body 110 with negative electrode active material layer 212 protruding to the negative electrode tab 230 side with respect to the end portion of positive electrode active material layer 242.

Negative electrode tab group 220 and negative electrode tab group 270 are curved by bringing sealing plate 120 close to the main body portion of electrode assembly 200 (first electrode assembly 201 and second electrode assembly 202). It should be noted that sealing plate 120 and case main body 110 are preferably brought close to each other by bringing sealing plate 120 close to the main body portion of electrode assembly 200 disposed in case main body 110. As shown in Fig. 11, negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from each of the current collector 410 side and the current collector 430 side. When electrode assembly 200 is pressed from each of the current collector 410 side and the current collector 430 side, negative electrode tab group 220 and negative electrode tab group 270 can be curved at the same time.

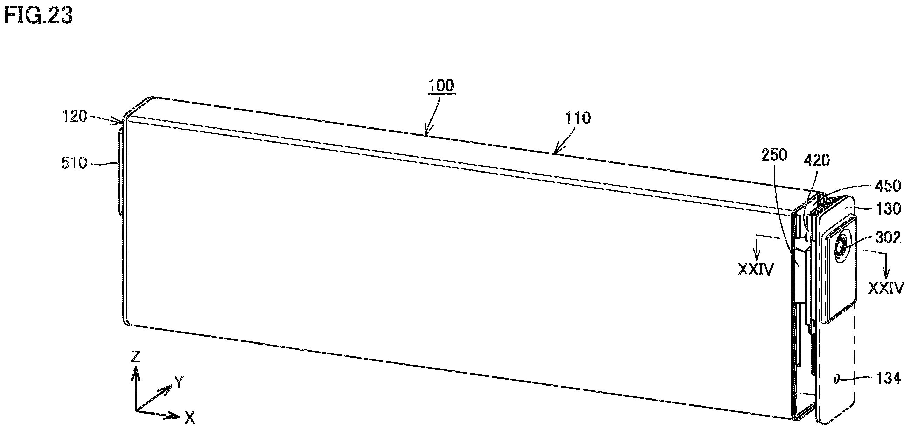

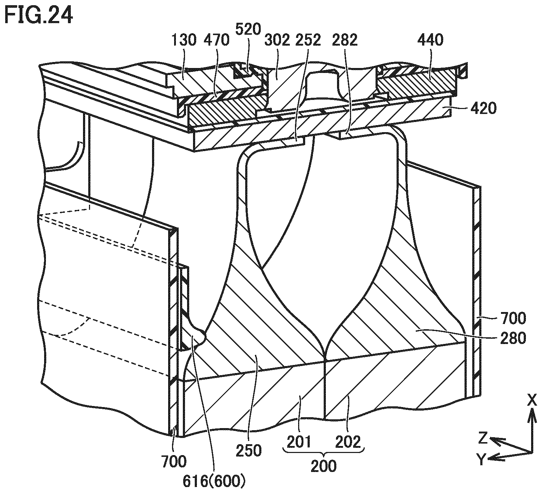

Fig. 23 is a perspective view showing a state of attaching sealing plate 130 to the current collectors on the positive electrode side. Fig. 24 is a cross sectional view of each of the electrode assemblies and the current collectors shown in Fig. 23 along XXIII-XXIII. In Fig. 24, case main body 110 is not shown.

As shown in Figs. 13, 22 and 23, current collector 420 is electrically connected to positive electrode terminal 302 after inserting first electrode assembly 201 and second electrode assembly 202 into case main body 110 (step S9).

Specifically, each of positive electrode terminal 302 and current collector 450 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. The connecting of plate-shaped member 304 to positive electrode terminal 302 may be performed at any timing.

As shown in Fig. 24, positive electrode tab group 250 and positive electrode tab group 280 connected to current collector 420 are folded such that tip portions 252, 282 face each other. From the state shown in Fig. 24, sealing plate 130 is brought into abutment with case main body 110. On this occasion, positive electrode tab group 250 and positive electrode tab group 280 are curved by bringing sealing plate 130 and the main body portion of electrode assembly 200 close to each other. As shown in Fig. 12, positive electrode tab group 250 and positive electrode tab group 280 are curved along the shape of spacer 600 such that the folded portions of curved portions 251, 281 are close to case main body 110 in the Y direction.

After sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

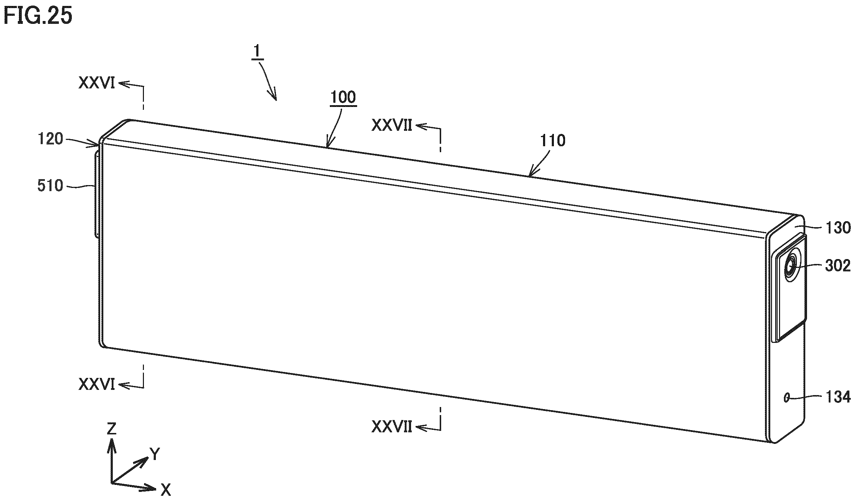

Fig. 25 is a perspective view showing the configuration of secondary battery 1. As shown in Figs. 13 and 25, next, sealing plate 120 and sealing plate 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S 11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

The order of the step of inserting electrode assembly 200 and the step of connecting the current collectors is not limited to the above-described example. For example, after only a portion of electrode assembly 200 is inserted into case main body 110 with the end portion of negative electrode active material layer 212 (second electrode active material layer) on the opening 113 side being disposed outside case main body 110 (first step), negative electrode terminal 301 (first electrode terminal) provided on sealing plate 120 (first sealing plate) and negative electrode tab groups 220, 270 (first electrode tab) may be electrically connected to each other, and then electrode assembly 200 may be inserted into case main body 110 until the end portion of negative electrode active material layer 212 on the opening 113 side is disposed inside case main body 110 (second step). That is, negative electrode terminal 301 and electrode assembly 200 can be electrically connected to each other during the step of inserting electrode assembly 200 into case main body 110.

In the present embodiment, since first electrode assembly 201 is provided with negative electrode tab group 220 and positive electrode tab group 250 and second electrode assembly 202 is provided with negative electrode tab group 270 and positive electrode tab group 280, first electrode assembly 201 and second electrode assembly 202 can be configured to have separate electrode tabs.

With this configuration, the electrode tabs can be shortened as compared with a case where one collective electrode tab is formed by first electrode assembly 201 and second electrode assembly 202 and the electrode tab is bent.

As a result, the occupied volume of the electrode tabs can be reduced, thereby improving the energy density of secondary battery 1. Further, in the configuration in which the separate electrode tabs are respectively provided for first electrode assembly 201 and second electrode assembly 202, the electrode tabs are readily bent and the electrode tabs and the current collectors can be therefore readily joined as compared with the case where one collective electrode tab is formed by first electrode assembly 201 and second electrode assembly 202, with the result that the secondary battery can be stably manufactured. In particular, since secondary battery 1 can be stably manufactured, reliability of the connection portion between each of the electrode tabs and each of the current collectors can be increased.

### (Specific Implementation of Insulating Sheet)

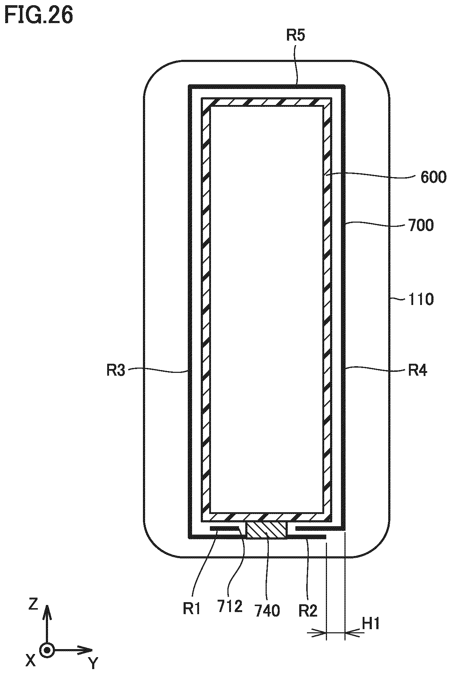

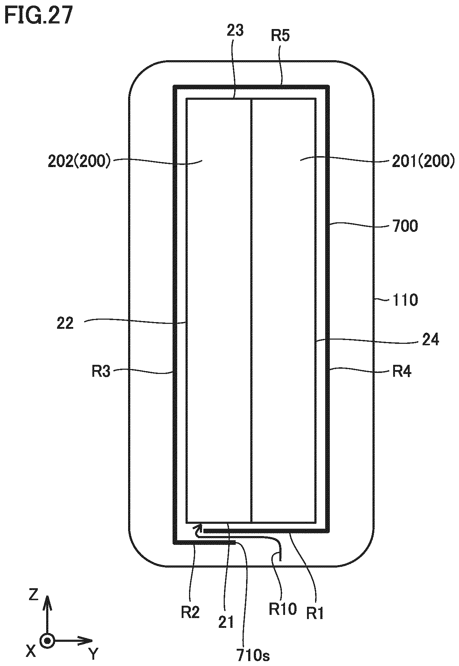

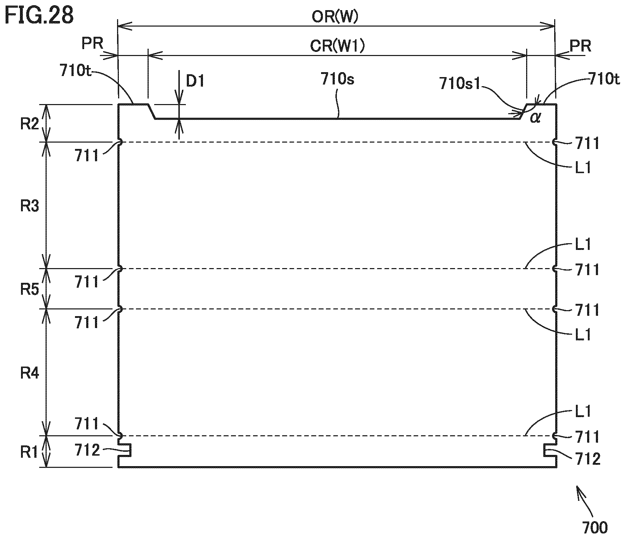

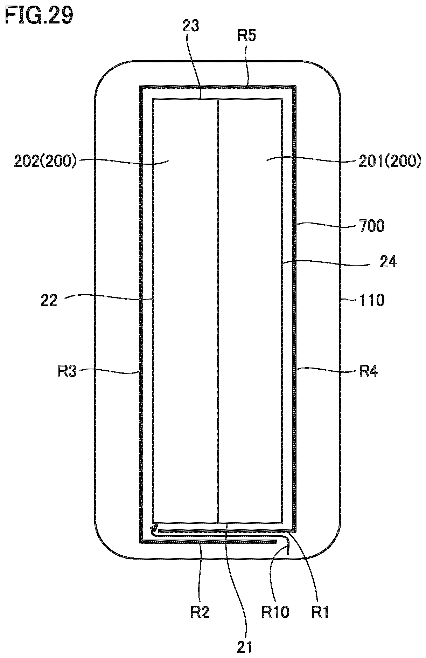

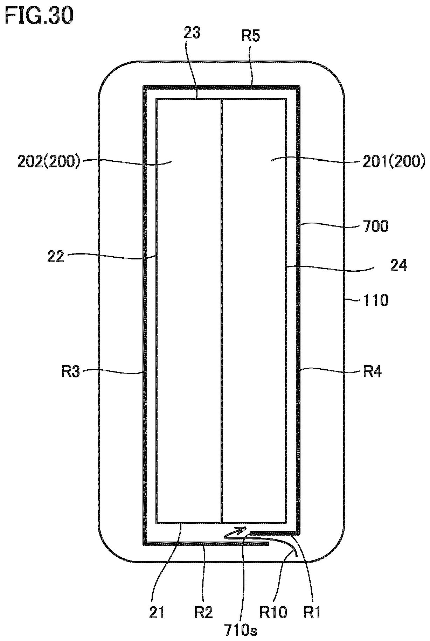

A specific implementation of insulating sheet 700 will be described with reference to Figs. 26 to 30. In part of the figures, the shape, cross sectional shape, and the like of secondary battery 1 are schematically shown without consideration of its actual dimensional relation in order to facilitate understanding of the structure. Fig. 26 is a cross sectional view of the secondary battery shown in Fig. 25 along XXVI-XXVI, Fig. 27 is a cross sectional view of the secondary battery shown in Fig. 25 along XXVII-XXVII, Fig. 28 is a development view of insulating sheet 700, Fig. 29 is a reference cross sectional view corresponding to the cross section of the secondary battery shown in Fig. 25 along XXVI-XXVI, and Fig. 30 is a reference cross sectional view corresponding to the cross section of the secondary battery shown in Fig. 25 along XXVI-XXVI.

As shown in Figs. 26 and 27, insulating sheet 700 is provided to cover the outer surface of electrode assembly 200 (first electrode assembly 201 and second electrode assembly 202) inside case main body 110. Insulating sheet 700 is preferably constituted of one sheet, and such one insulating sheet 700 may be wound around electrode assembly 200. A first region R1 and a second region R2 of insulating sheet 700 are overlapped with each other to provide an overlapping region OR as described below.

As shown in Fig. 28, insulating sheet 700 is one sheet having a rectangular shape in an unfolded state. Insulating sheet 700 can be divided into first region R1, second region R2, a third region R3, a fourth region R4, and a fifth region R5 along a direction orthogonal to the width direction (X direction) of electrode assembly 200. In insulating sheet 700, first region R1 is constituted of a vicinity of one end portion of the sheet, and second region R2 is constituted of a vicinity of the other end portion of the sheet.

In the width direction (X direction) of electrode assembly 200, overlapping region OR includes a central region CR and an end-portion region PR located beside each of both sides of central region CR, central region CR is provided with a non-overlapping region that reduces an area of overlapping region OR, and central region CR of insulating sheet 700 is about 80% from the center and the remainder, i.e., each of end-portion regions PR located beside both sides thereof, is about 10% in the lateral direction (width direction of electrode assembly 200) in the present embodiment.

The non-overlapping region that reduces the area of overlapping region OR means a region that reduces the area of overlapping region OR by changing the shape of second region R2 in central region CR when the non-overlapping region is provided as compared with a state in which the shape of second region R2 is unchanged in the lateral direction in each of central region CR and end-portion region PR.

Second region R2 of insulating sheet 700 of the present embodiment is provided with a recess 710s as the non-overlapping region at an end side of central region CR in a peripheral direction of insulating sheet 700, recess 710s being recessed inward with respect to an end side of the end-portion region. Various implementations of recess 710s can be employed; however, in central region CR, a ratio of providing the non-overlapping region with respect to the overlapping area when recess 710s serving as the non-overlapping region is not provided may be 20% or more.

The width of recess 710s is preferably about 30% or more, and more preferably 50% or more of the entire width of the main body portion of electrode assembly 200. The length of the main body portion of electrode assembly 200 means the length of electrode assembly 200 except for the lengths of the negative electrode tab group and the positive electrode tab group provided on the both sides of electrode assembly 200. It should be noted that the width of recess 710s is defined as the width thereof at its portion having the largest width. For example, when recess 710s has such a shape that the width of recess 710s is increased toward the tip (upper end in Fig. 28) of second region R2 as shown in Fig. 28, the width of recess 710s is defined as the width of recess 710s at a position corresponding to the tip (upper end in Fig. 28) of second region R2.

Insulating sheet 700 preferably has a bending line (bend) L1 at a boundary between the respective regions in advance in order to facilitate an operation of winding it around electrode assembly 200. When a first notch region 711 recessed inward is provided at each of both end portions of bending line (bend) L1 in the width direction, the operation of winding it around electrode assembly 200 is further facilitated. The shape of first notch region 711 is a semicircular shape in the figure, but may be a trapezoidal shape, a rectangular shape, a triangular shape, or the like.

In order to facilitate connection to spacer 600 as described below, a second notch 712 recessed inward may be provided at each of both end portions of first region R1 of insulating sheet 700 in the width direction. The shape of second notch 712 is a rectangular shape in the figure, but may be a semicircular shape, a trapezoidal shape, a rectangular shape, a triangular shape, or the like. Further, instead of the notch with its one side being open as shown in the figure, a shape of a through hole may be employed.

An angle (α) formed by each of lateral sides 710s1 of both ends of recess 710s and an end side 710t of end-portion region PR may be 100° or more. Thus, insulating sheet 700 can be suppressed from being snagged when electrode assembly 200 around which insulating sheet 700 is wound is inserted into case main body 110.

Insulating sheet 700 may be composed of, for example, a resin as described above. More specifically, as the material of insulating sheet 700, for example, polypropylene (PP), polyethylene terephthalate (PET), polyphenylene sulfide (PPS), polyimide (PI), or polyolefin (PO) can be used. The thickness of insulating sheet 700 is preferably larger than the thickness (5 µm to 20 µm) of separator 800.

Referring again to Figs. 26 and 27, electrode assembly 200 has a pair of a first surface 21 and a third surface 23 corresponding to the height direction (Z direction) of secondary battery 1, and a pair of a second surface 22 and a fourth surface 24 corresponding to the thickness direction (Y direction) of the secondary battery. It should be noted that the area of each of first surface 21 and third surface 23 is preferably smaller than the area of each of second surface 22 and fourth surface 24.

Electrode assembly 200 can be a stacked type electrode assembly including a plurality of positive electrode plates and a plurality of negative electrode plates. In this case, first surface 21 is a surface on a side on which the end surface of each positive electrode plate and the end surface of each negative electrode plate are disposed. It should be noted that the end surface of the positive electrode plate or the end surface of the negative electrode plate may be covered with a separator. Further, the positions of the end surface of the positive electrode plate and the end surface of the negative electrode plate may be deviated from each other. It should be noted that the separator may be a plurality of separators each having a rectangular shape, may be a separator that has a shape of strip and that is folded in a meandering manner, or may be implemented in a different manner.

When insulating sheet 700 is wound around electrode assembly 200, first region R1 and second region 2 face first surface 21, third region R3 faces second surface 22, fourth region R4 faces third surface 23, and fifth region R5 faces fourth surface 24. First region R1 and second region R2 cover first surface 21 and have overlapping region OR in which second region R2 overlaps with first region R1. It should be noted that in each of first region R1 to fifth region R5, a portion of boundary with an adjacent region is a bent portion.

The tip of second region R2 may be separated from a bent portion (outer surface of fourth region R4) between first region R1 and fourth region R4 (distance H1 in the figure). Distance H1 is 5% or more, preferably 10% or more of the thickness of electrode assembly 200.

When insulating sheet 700 implemented as described above is wound around electrode assembly 200, the insulating sheet is wound such that first region R1 is located on the side in contact with spacer 600 and second region R2 is located over first region R1 as shown in Fig. 26.

In the region in which each of spacers 600 (the first spacer and the second spacer) provided on the both sides is located, insulating sheet 700 is connected to each of spacers 600 (the first spacer and the second spacer) by using second notches 712 provided in first region R1. For the connection of insulating sheet 700 to spacer 600, connection means such as thermal welding, ultrasonic welding, adhesion by a tape, adhesion by an adhesive agent, fitting, or hooking is employed.

As shown in Fig. 26, it is preferable that a region of second region R2 facing second notch 712 is connected to spacer 600 via second notch 712 so as to provide a connection portion 740. It should be noted that a through hole or the like may be employed instead of second notch 712 as described above.

For the connection of insulating sheet 700 to spacer 600, by using second notch 712 provided in first region R1, second region R2 is directly fixed to spacer 600 with first region R1 being pressed by second region R2. As a result, insulating sheet 700 can be stably and readily fixed to spacer 600.

When a configuration in which no spacer 600 is provided is employed, first region R1 and second region R2 are connected to each other using the above-described connection method in the regions of the both end portions in which second notches 712 are provided.

When insulating sheet 700 implemented as described above is wound around electrode assembly 200, a ratio of an overlapping portion between first region R1 and second region R2 in a region corresponding to the central region of first surface 21 of electrode assembly 200 is preferably larger than a ratio of the overlapping portion between first region R1 and second region R2 in a region corresponding to the end-portion region of first surface 21 of electrode assembly 200 as shown in Figs. 26 to 29. Thus, since the overlapping region between first region R1 and second region R2 is provided to some extent, a positional relation between insulating sheet 700 and electrode assembly 200 can be stabilized and an impregnation property of the electrolyte solution into the central region of electrode assembly 200 can be increased. It should be noted that the present disclosure is particularly effective in a battery having a high capacity (for example, a battery having a capacity of 50 Ah or more).

When spacer 600 is provided, the positional relation between insulating sheet 700 and electrode assembly 200 can be stabilized more effectively. When insulating sheet 700 implemented as described above is wound around electrode assembly 200, in the overlapping portion between first region R1 and second region R2, a large ratio of the overlapping area between first region R1 and second region R2 is secured in end-portion region PR, and a ratio of the overlapping area between first region R1 and second region R2 in recess 710s is smaller than that in end-portion region PR as shown in Fig. 26.

As a result, an area for winding of insulating sheet 700 around spacer 600 can be secured in end-portion region PR, thereby stabilizing a state of winding of insulating sheet 700 around spacer 600. On the other hand, since recess 710s is provided, the overlapping area is reduced and a clearance is formed between first region R1 and second region R2.

With such an overlapping state that reduces the overlapping area, in the manufacturing process for the secondary battery, a path for entry of the electrolyte solution (arrow R10 in Fig. 26) into electrode assembly 200 becomes short to facilitate the entry of the electrolyte solution thereinto. As a result, the entry of the electrolyte solution can be suppressed from being hindered. For example, as shown in Fig. 29, when the overlapping length between first region R1 and second region R2 is long, the path for the entry of the electrolyte solution (arrow R10 in Fig. 30) into electrode assembly 200 becomes long, with the result that the entry of the electrolyte solution is likely to be hindered.

Thus, according to the structure of secondary battery 1 in the embodiment, it is possible to suppress the hinderance of impregnation, entry and exit of the electrolyte solution into and from electrode assembly 200 while suppressing direct contact between electrode assembly 200 and case main body 110. As a result, it is possible to provide secondary battery 1 improved in the infiltration property of the electrolyte solution into electrode assembly 200 having a high capacity and a high density.

As shown in Fig. 5, gas-discharge valve 150 is provided in case main body 110, and the surface thereof in which gas-discharge valve 150 is provided may be disposed to face first surface 21 of electrode assembly 200. Gas-discharge valve 150 is fractured when internal pressure of case main body 110 becomes equal to or more than a predetermined value, and discharges the gas in case main body 110 to the outside of case main body 110. Therefore, as the overlapping area between first region R1 and second region R2 of insulating sheet 700 is smaller, the gas generated from electrode assembly 200 can be more efficiently discharged to the outside of case main body 110.

For example, referring to Fig. 28, width W1 of recess 710s is preferably 50% or more, more preferably 70% or more, and further preferably 80% or more of entire width W of insulating sheet 700. Thus, the gas generated from electrode assembly 200 can be efficiently discharged to the outside.

Insulating sheet 700 described above employs such a configuration that recess 710s is provided in second region R2 located on the outer side; however, the same function and effect can be obtained also when insulating sheet 700 employs such a configuration that recess 710s is provided in first region R1 located on the inner side as shown in Fig. 30.

### (Specific Implementations of Recess 710s)

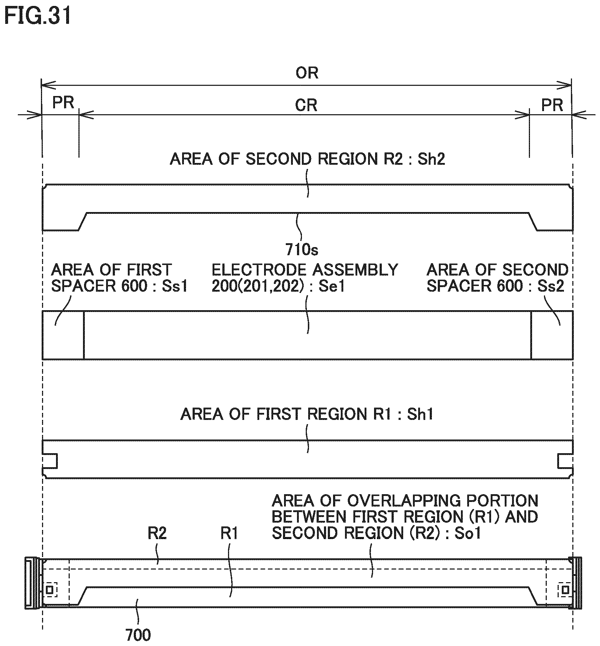

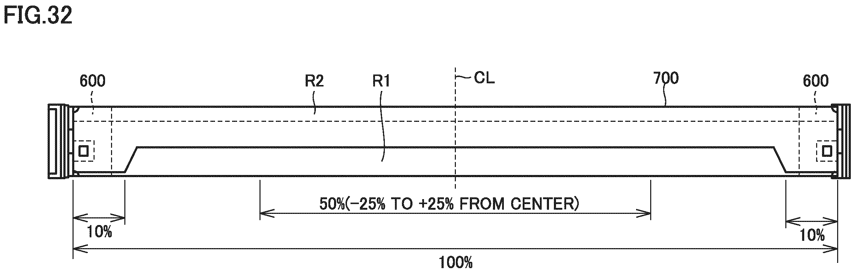

Next, specific implementations of recess 710s that constitutes the non-overlapping region provided in second region R2 will be described with reference to Fig. 31. Fig. 31 shows the areas of the regions when viewed from the first surface 21 side of electrode assembly 200 (when viewed in the direction perpendicular to first surface 21) as follows: [1] the area (Sh2) of second region R2 of insulating sheet 700; [2] the area (Ss1) of spacer 600 (first spacer), the area (Se1) of first surface 21 of electrode assembly 200, and the area (Ss2) of spacer 600 (second spacer); [3] the area (Sh1) of first region R1 of insulating sheet 700; and [4] the area (So1) of the region in which first region R1 and second region R2 of insulating sheet 700 overlap with each other. It should be noted that the areas of the positive electrode tab group and the negative electrode tab group are excluded from the area of electrode assembly 200. In Fig. 32, case main body 110 is not shown.

When the areas of the respective regions are thus defined, X1 may be provided to be larger than Y1, where X1 is defined as a ratio of [the area of the region in which spacer 600 (first spacer), first region R1, and second region R2 overlap] / [the area (Ss1) of spacer 600 (first spacer)], and Y1 is defined as a ratio of [the area of the region in which the region of electrode assembly 200 that does not overlap with spacer 600 (first spacer), first region R1, and second region R2 overlap] / [the area (Se1) of the region of electrode assembly 200 that does not overlap with spacer 600 (first spacer)]. The same applies to a case where spacer 600 (first spacer) is replaced with spacer 600 (second spacer).

Thus, the ratio of the overlapping region between first region R1 and second region R2 in the region overlapping with spacer 600 is preferably larger than the ratio of the overlapping region between first region R1 and second region R2 in the region overlapping with electrode assembly 200.

Specifically, X1 is preferably 0.5 or more, more preferably 0.6 or more, and further preferably 0.7 or more. Y1 is preferably less than 0.5, more preferably 0.4 or less, and further preferably 0.3 or less. It should be noted that Y1 is preferably 0.03 or more, and more preferably 0.05 or more, for example.

It should be noted that only one of the first spacer side and the second spacer side may satisfy the above-described relation. However, both the first spacer side and the second spacer side preferably satisfy the above-described relation. It should be noted that both the first spacer and the second spacer are not essential configurations, and only one of them may be provided.

Here, the above-described numerical values are obtained in the case where spacers 600 (the first spacer and the second spacer) are provided, but the following describes a case where optimization of the area (So1) of the region in which first region R1 and second region R2 overlap with each other is examined regardless of the presence or absence of spacers 600 with reference to Fig. 32. Fig. 32 is a diagram showing central region CR and the end-portion regions when viewed from the first surface 21 side of electrode assembly 200. It should be noted that case main body 110 is not shown in Fig. 32.

Referring to Fig. 32, regardless of the presence or absence of spacers 600, when viewed from the first surface 21 side of electrode assembly 200, central region CR means a region of -25% to +25% (the leftward direction in the figure represents the negative direction and the rightward direction in the figure represents the positive direction) from the central line (CL) of insulating sheet 700 (electrode assembly 200), and each of the end-portion regions means a region of 10% from a corresponding end portion of insulating sheet 700.

In the above case, X2 is preferably provided to be larger than Y2, where X2 is defined as a ratio of [the area of the overlapping portion between first region R1 and second region R2 in the end-portion region (region of 10% from the end portion)] / [the area of the end-portion region (region of 10% from the end portion)], and Y2 is defined as a ratio of [the area of the overlapping portion between first region R1 and second region R2 in central region CR (region of -25% to +25% from the center)] / [the area of central region CR (region of -25% to +25% from the center)].

Specifically, X2 is preferably 0.5 or more, more preferably 0.6 or more, and further preferably 0.7 or more. Y2 is preferably less than 0.5, more preferably 0.4 or less, and further preferably 0.3 or less. It should be noted that Y2 is preferably 0.03 or more, and more preferably 0.05 or more, for example.

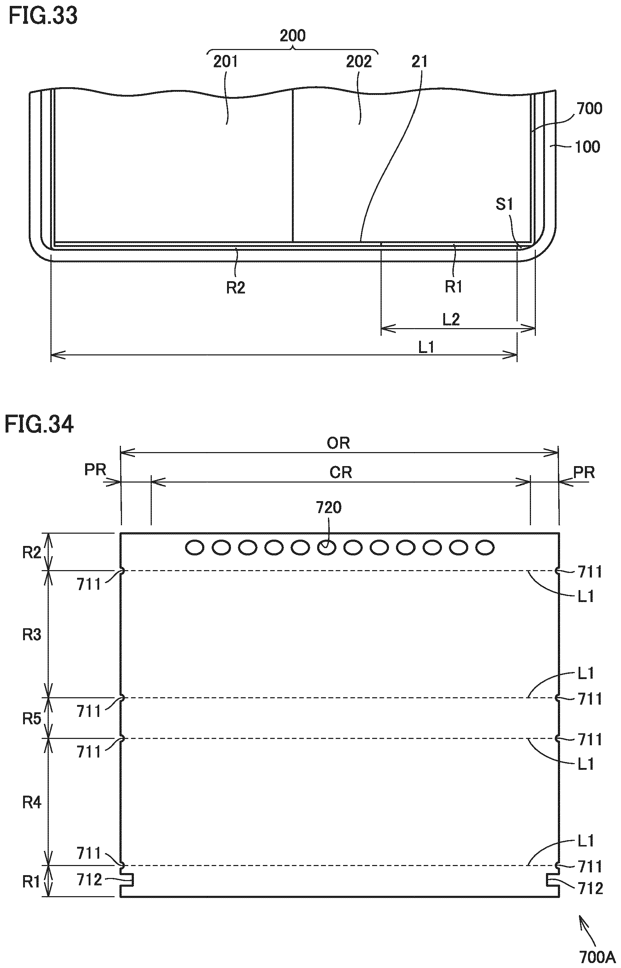

Referring to Fig. 33, the following describes a case where recess 710s is provided in first region R1 of first region R1 located on the inner side and second region R2 located on the outer side with respect to insulating sheet 700 facing first surface 21 of electrode assembly 200. Fig. 33 corresponds to a partial enlarged view of the first surface 21 side of electrode assembly 200 shown in Fig. 30.

When recess 710s is provided on the inner side, the electrolyte solution may remain in a clearance S1 formed between insulating sheet 700 and case main body 110. Therefore, length L1, in the thickness direction of electrode assembly 200, of second region R2 located on the case main body 110 side is preferably 90 or more when the thickness of electrode assembly 200 is assumed to be 100. On the other hand, length L2 of first region R1 located on the electrode assembly 200 side is preferably 20 or less when the thickness of electrode assembly 200 is assumed to be 100 in order to secure an internal space in which the electrolyte solution flows and to inject a large amount of the electrolyte solution at one time.

### (Second Embodiment: Insulation Sheet 700A)

Another implementation of the insulating sheet will be described with reference to Fig. 34. It is not limited to the implementation of recess 710s as long as there is provided a region having the same function as the function required for the non-overlapping region that reduces the overlapping area of the overlapping region provided in central region CR of insulating sheet 700. Fig. 34 is a development view showing an implementation of an insulating sheet 700A according to a second embodiment.

In insulating sheet 700A, a plurality of through holes 720 are provided in central region CR instead of recess 710s that constitutes the non-overlapping region. The shape of each of through holes 720 is not particularly limited, and various shapes such as a circular shape, an elliptical shape, and a rectangular shape can be employed. It should be noted that through hole 720 may be formed in at least one of first region R1 or second region R2.

Thus, also when the plurality of through holes 720 are used as the non-overlapping region, it is possible to exhibit the same function and effect as those of insulating sheet 700 in the first embodiment.

### (Third Embodiment: Insulation Sheet 700B)

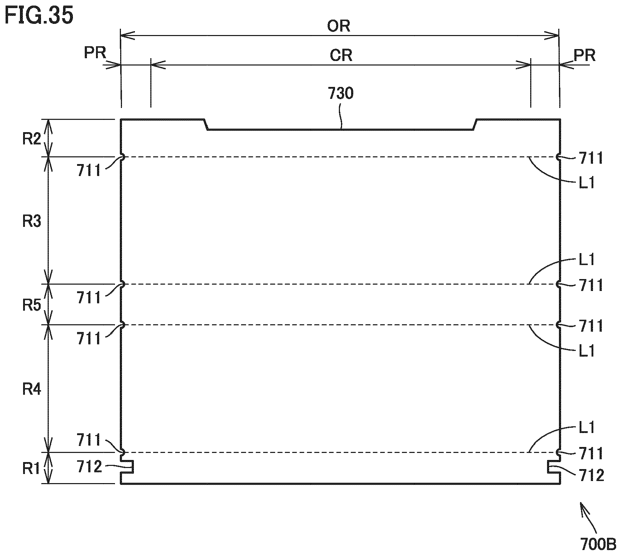

Another implementation of the insulating sheet will be described with reference to Fig. 35. Fig. 35 is a development view showing an implementation of an insulating sheet 700B according to a third embodiment.

In insulating sheet 700 shown in Fig. 28, recess 710s is provided in the whole of central region CR, whereas in insulating sheet 700B of the present embodiment, recess 710s is provided in a part of central region CR, rather than the whole of central region CR.

Also with such an implementation of recess 710s, it is possible to exhibit the same function and effect as those of insulating sheet 700 in the first embodiment.

### (Fourth Embodiment: Insulation Sheet 700C)

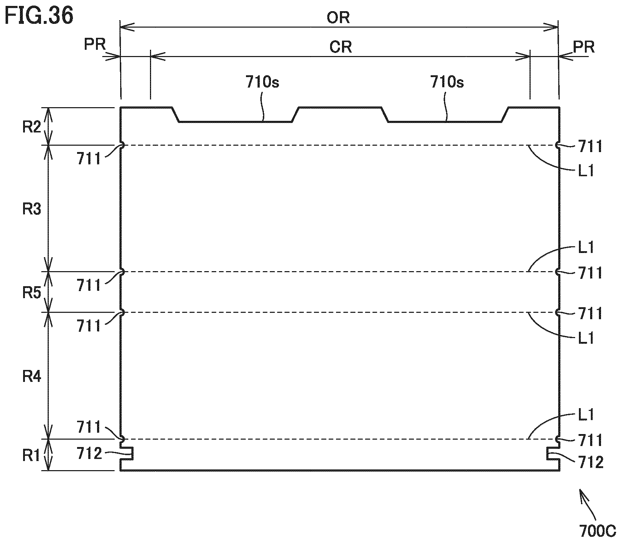

Another implementation of the insulating sheet will be described with reference to Fig. 36. Fig. 36 is a development view showing an implementation of an insulating sheet 700C according to a fourth embodiment.

In the present embodiment, recesses 710s provided in central region CR are provided at two separate locations. Recesses 710s are not limited to being provided at the two locations and may be provided at three or more separate locations.

Thus, also when the plurality of recesses 710s are separately provided, it is possible to exhibit the same function and effect as those of insulating sheet 700 in the first embodiment.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery comprising:
an electrode assembly (200) including a first electrode and a second electrode having a polarity different from a polarity of the first electrode;
a battery case (100) that accommodates the electrode assembly (200);
a first electrode tab group (220, 270) electrically connected to the first electrode and disposed at one end portion of the electrode assembly (200);
a second electrode tab group (250, 280) electrically connected to the second electrode and disposed at the other end portion of the electrode assembly (200); and
an insulating sheet (700, 700A, 700B, 700C) that covers the electrode assembly (200), wherein
the electrode assembly (200) includes a first surface (21),
the insulating sheet (700, 700A, 700B, 700C) includes a first region (R1) constituted of a vicinity of one end portion of the insulating sheet (700, 700A, 700B, 700C) and a second region (R2) constituted of the other end portion of the insulating sheet (700, 700A, 700B, 700C),
the first region (R1) and the second region (R2) cover the first surface (21),
an overlapping region (OR) in which the second region (R2) overlaps with the first region (R1) is provided,
in a width direction of the electrode assembly (200), the overlapping region (OR) includes a central region (CR) and an end-portion region (PR) located beside each of both sides of the central region (CR), and
the central region (CR) has a non-overlapping region that reduces an overlapping area of the overlapping region (OR).

2. The secondary battery according to claim 1, wherein in the central region (CR), a ratio of providing the non-overlapping region with respect to the overlapping area when the non-overlapping region is not provided is 20% or more.

3. The secondary battery according to claim 1 or 2, wherein at least one of the first region (R1) and the second region (R2) is provided with a recess (710s) as the non-overlapping region at an end side of the central region (CR) in a peripheral direction of the insulating sheet (700, 700A, 700B, 700C), the recess (710s) being recessed inward with respect to an end side of the end-portion region (PR).

4. The secondary battery according to claim 3, wherein the recess (710s) is provided in the second region (R2).

5. The secondary battery according to claim 3 or 4, wherein an angle formed by each of lateral sides of both ends of the recess (710s) and the end side of the end-portion region (PR) is 100° or more.

6. The secondary battery according to any one of claims 1 to 5, further comprising:
a first spacer (600) disposed on an end surface of the electrode assembly (200) on which the first electrode tab group (220, 270) is provided; and
a second spacer (600) disposed on an end surface of the electrode assembly (200) on which the second electrode tab group (250, 280) is provided, wherein
the insulating sheet (700, 700A, 700B, 700C) and the first spacer (600) are connected to each other on a side on which the first electrode tab group (220, 270) is provided, and
the insulating sheet (700, 700A, 700B, 700C) and the second spacer (600) are connected to each other on a side on which the second electrode tab group (250, 280) is provided.

7. The secondary battery according to claim 6, wherein
in an area when viewed from the first surface (21) side of the electrode assembly (200), X1 is larger than Y1, where
X1 is defined as a ratio of [an area of a region in which the first spacer (600), the first region (R1), and the second region (R2) overlap] / [an area of the first spacer (600)], and
Y1 is defined as a ratio of [an area of a region in which the electrode assembly (200), the first region (R1), and the second region (R2) overlap] / [an area of the electrode assembly (200)].

8. The secondary battery according to claim 6 or 7, wherein
in order to connect the insulating sheet (700, 700A, 700B, 700C) to the first spacer (600),
the first region (R1) is provided with an opening or notch (712), and
the second region (R2) is connected to the first spacer (600) at a region facing the opening or notch (712).

9. The secondary battery according to any one of claims 1 to 8, wherein
in an area when viewed from the first surface (21) side of the electrode assembly (200), X2 is larger than Y2, where
X2 is defined as a ratio of [an area of an overlapping portion between the first region (R1) and the second region (R2) in the end-portion region (PR)] / [an area of the end-portion region (PR)], and
Y2 is defined as a ratio of [an area of the overlapping portion between the first region (R1) and the second region (R2) in the central region (CR)] / [an area of the central region (CR)].

10. The secondary battery according to any one of claims 1 to 9, wherein
the electrode assembly (200) has a third surface (23) adjacent to the first surface (21),
the insulating sheet (700, 700A, 700B, 700C) has a fourth region (R4) that covers the third surface (23),
a bent portion is provided between the first region (R1) and the fourth region (R4), and
a tip of the second region (R2) is located away from the bent portion.

11. The secondary battery according to any one of claims 1 to 10, wherein
a gas-discharge valve (150) is provided in the battery case (100), and
a surface of the battery case (100) in which the gas-discharge valve (150) is provided faces the first surface (21).

12. The secondary battery according to any one of claims 1 to 11, wherein
the battery case (100) includes
a case main body (110) provided with a first opening (113) at one end portion of the case main body (110) and a second opening (114) at the other end portion of the case main body (110),
a first sealing plate (120) that seals the first opening (113) and that is welded to the case main body (110), and
a second sealing plate (130) that seals the second opening (114) and that is welded to the case main body (110),
the first electrode tab group (220, 270) is disposed at an end portion of the electrode assembly (200) on the first opening (113) side, and
the second electrode tab group (250, 280) is disposed at an end portion of the electrode assembly (200) on the second opening (114) side.
